# EUROPEAN PATENT SPECIFICATION

(11) **EP 4 529 818 B1**
(45) Date of publication and mention of the grant of the patent: **14.01.2026**
(21) Application number: 23200893.8
(22) Date of filing: 29.09.2023
(51) Int. Cl.: A47J 42/16, A47J 42/18, A47J 42/38

(54) **AUTOMATIC COFFEE BEAN GRINDER**
AUTOMATISCHE KAFFEEBOHNENMÜHLE
BROYEUR AUTOMATIQUE DE GRAINS DE CAFÉ

(43) Date of publication of application: 02.04.2025
(73) Proprietor: Hemro International AG, 8050 Zürich (CH)
(72) Inventor: VITTORIO, Alex, 5600 Lenzburg (CH)
(74) Representative: Bremi, Tobias Hans

(56) References cited:
- EP-A1- 3 381 339
- WO-A1-2021/113790
- WO-A2-2004/093615
- CN-B- 107 744 346

## Description

### TECHNICAL FIELD

The present invention relates to a coffee bean grinder, which is easy to manufacture, robust, and which is in particular easy to service and/or clean in a way of avoiding problems associated with improper and unexperienced handling. It also relates to methods of manufacturing corresponding grinders and methods of servicing and/or cleaning corresponding grinders, as well as uses of such grinders.

### PRIOR ART

Coffee grinders or grinding groups in machines that dispense coffee beverages comprise a container of coffee beans, connected to a grinding chamber into which the beans flow and are transformed into ground coffee, and a subsequent system for conveying the ground beans to an infusion or portioning system for the sale of the coffee in a beverage or ground form.

The ground coffee in said grinding chamber is not characterized by particles of uniform geometry but by a distribution of such geometry (particle size distribution) which is highly variable depending both on the distance between the grinding tools through which the coffee bean passes (called mills) and on other factors such as the degree of roasting of the bean, the temperature at which the grinding takes place, the geometry of the mill itself or of the cutting edges thereof, the quality of the cutting edge of the mill, the speed of rotation of the tools, etc., all of which affect the grinding mechanics.

Coffee grinders exist and are well-established wherein the distance between the mills that grind the beans is adjusted by means of a screw/nut screw coupling that puts one of the two grinding elements of the mill in position with respect to the other.

The adjustment of the distance between the grinding elements is therefore carried out by means of members that, rotating by means of the screw/nut screw coupling, cause an axial shift (modification of the distance) of one of the two grinding elements.

Once the optimal degree of fineness of the ground coffee has been defined, subsequent adjustments to the relative position between the grinding elements are often required in the course of the day or on subsequent days, as there are many aspects that, with the same positioning of the grinding elements, may affect the particle size distribution of the ground coffee.

One of the grinding elements in such coffee grinders is mounted stationary, and the other grinding element is mounted in a rotating way, and is driven by a motor. The load on the grinding parts is enormous, since during grinding high temperatures can be achieved, the grinding generates a lot of friction and torque, and in addition to that the rotating and adjustable parts are subject to getting dirty by fine particles penetrating into smallest gaps. Correspondingly regular cleaning and maintenance, including for example also replacement of grinding elements, is important and is a key factor for high ground coffee quality. There is therefore a desire to have the possibility of easy access to the grinding elements, so as to simplify the cleaning and/or servicing process. On the other hand in order to have a powerful and reliable system, which in particular is not prone to grinding gap changes during use, the parts need to be very firmly fixed in space. These are conflicting requirements, since any ease of access will often go to the detriment of the rigidity of the structure.

EP-A-3824776 discloses a grinder-doser apparatus with removable grinding chamber for extraction, with fast release; the proposed solution makes the grinding adjustment independent of the access to the grinding chamber and makes maintenance easier for the operator. An interface flange is provided which is interposed in univocal position between the adjusting ring nut and the fixed structure of the chamber, which flange makes the coupling indirect of the ring nut and of the extractable group to said fixed structure, being screwed into said flange which is instead slidingly inserted. The locking involves a hooking and releasing system of fast and tensioned type, by means of levers with cam tooth mounted externally on said interface flange, which engage hooking the head of respective tie-rod groups with elastic spring, putting them in traction, which are joined to said fixed structure of the chamber.

WO-A-2021113790 discloses a coffee grinder suitable for home use which can include a housing that receives coffee beans, a grinding component within the housing, a removable container that receives coffee grounds dispensed from the grinding component, and a base located beneath the grinding component that supports the container. Magnetic components in the base and removable container can align the container when placed atop the base. A knocker system can dislodge ground coffee residue into the container when actuated. An intelligent drive system can utilize feedback to drive the grinding component at a constant speed to minimize coffee grounds size variances. A grinds chamber in the housing can define an asymmetrical cross-sectional geometry. An augur that drives the grinding component can have an outer thread that forces coffee beans through the grinds chamber, and a grinds chamber housing can include a protective shoulder that covers a lead-in portion of the outer thread.

CN-A-107744346 relates to coffee bean grinding equipment, in particular to a bean grinder easy to clean. The bean grinder easy to clean comprises an inner grinding wheel and an outer grinding wheel assembly, the inner grinding wheel is driven by a driving shaft of a driving mechanism to rotate relative to the outer grinding wheel assembly, and the inner grinding wheel can sleeve the driving shaft in a mode of axially moving; the outer grinding wheel assembly comprises an outer grinding wheel and an outer support which are detachably and fixedly connected, the inner grinding wheel is detachably installed in the outer support in a sleeved mode, and the inner grinding wheel and the outer grinding wheel are correspondingly matched. By means of the bean grinder easy to clean, through the structural design of layer-by-layer sleeving, both grinding wheels can be detached to be cleaned, thus the purpose of thoroughly cleaning the grinding wheel device is achieved, and the problems that the grinding wheel device is clogged and ground coffee gets bad can be solved.

WO-A-2004093615 discloses a grinder which includes a grinder assembly retained in a housing. The grinder assembly receives material for grinding such as coffee beans. Grinding burrs are provided, one of which is rotated by a grinder drive motor of the grinder assembly. The other of the burrs is generally non-rotatable with regard to the general grinding operation. The two grinding burrs are provided with grinding surfaces against which beans are ground. The grinding surfaces are spaced a desired dimension away from each other to produce a desired grind of coffee. An apparatus, system and method is disclosed for adjusting at least the generally non-rotatable burr to maintain, calibrate or otherwise adjust the dimension or gap between the grinding surfaces of the burrs.

### SUMMARY OF THE INVENTION

It is an object of the present invention to provide an automatic grinder, which is in particular easy to service and/or clean in a way of avoiding problems associated with improper and unexperienced handling.

Correspondingly, the present invention relates to a grinder as defined in claim 1 as well as to methods and uses as defined in the further claims.

According to a first aspect of the present invention, it relates to a coffee grinder with a grinder motor and a grinder unit with a rotating grinder element and a stationary grinder element, the distance of which (grinder gap width for the grinding degree adjustment) can be manually adjusted by using a manual adjustment element and/or automatically adjusted by way of a grinder adjustment motor.

This is characterized in that the grinder motor and the grinder unit are located in a first portion of the grinder and the adjustment element and the grinder adjustment motor are mounted in a second portion of the grinder, and in that the first portion is fixedly mounted on a stand and the second portion is attached to the first portion by way of hinge, said hinge allowing to tilt the second portion from
- a closed position, in which the first portion is located adjacent to the second portion, and where the first portion and the second portion are engaged in a way such that by way of the adjustment element and/or the grinder adjustment motor the distance of the grinder elements can be adjusted,
- to an open position, in which the second portion is panned away from the first portion and whereby access, in particular direct access, is given to the grinder unit.

According to a first preferred embodiment, the axis of said hinge is arranged in a vertical direction, and preferably the axis is located in or at a protrusion of the second portion protruding from the second portion in the direction of the first portion.

Preferably, the vertical axis is mounted in or on the first portion in a slidable way, preferably slidable along a direction perpendicular to a contact plane between the first portion and the second portion in the closed position, and wherein further preferably the slidable mounting is provided in or on protrusions protruding from the first portion along said direction perpendicular to the contact plane, preferably implemented with slots as described further below.

Preferably, there is provided a locking mechanism for locking the second portion in the closed position, wherein further preferably said locking mechanism is based on form closure and/or force closure and preferably is selected from the group consisting of bayonet locking, lever lock, hook lock, screwing or a combination thereof.

The locking mechanism can at least partly be located essentially opposite to the location of the hinge.

The locking mechanism can be provided in that the second portion is provided with engagement elements, preferably with engagement screws (preferably radially offset from the machine shaft axis and e.g. circumferentially distributed), which in the closed position are oriented essentially parallel to a machine shaft axis of the grinder motor, which engagement elements in the closed position engage, preferably threadingly, in complementary engagement means, preferably in the form of engagement interior threadings provided in or on the first portion.

Preferably, the engagement elements and the complementary engagement means are provided in a contacting interface portion of the first portion and of the second portion, such that in the closed position the engagement elements and the complementary engagement means are buried within the housing of the first portion and the second portion.

The engagement screws can e.g. be made accessible for loosening by removal of a front face plate of the front portion.

Preferably, the second portion comprises at least one bearing acting as a bearing for a tip portion of the machine shaft, wherein this bearing is axially slidably mounted in the front portion but axially fixed in a direction to the back portion to the axially slidable machine shaft in the closed position.

The adjustment element can be an adjustment wheel rotatably mounted in the second portion with a horizontal rotation axis and preferably facing a front side of the grinder.

The grinder adjustment motor can be located in the front portion, and the grinder adjustment motor shaft is parallel to the motor shaft but radially offset to the motor shaft.

Preferably, in the front portion there is provided a gear wheel, which is coaxial with the machine shaft, which gear wheel is mounted such that upon rotation of the gear wheel the gear wheel is displaced relative to the front portion in an axial direction, and wherein the axial displacement of the gear wheel is directly or indirectly coupled to the axially slidably mounted machine shaft and in particular to a rotating grinder plate mounting mounted on the machine shaft and carrying the rotating grinder plate, for adjustment of the gap width of the grinder unit.

The gear wheel can be rotating for gap width adjustment by way of the manual grinder adjustment wheel as well as by way of the grinder motor, wherein preferably the gear wheel is provided with an external toothing cooperating with an outer threading of the motor shaft of the grinder adjustment motor.

Preferably, the grinder comprises a vertical stand on a baseplate and wherein in the closed position said first portion and said second portion are aligned coaxially and horizontally and the grinder motor is mounted in said first portion with its machine shaft being arranged horizontally and preferably coaxially with said first and second portion.

The grinder unit may comprise a rotating grinder element in the form of a grinding ring mounted on a rotating grinder plate mounting which is coupled to the machine shaft of the motor, and a stationary grinder element also in the form of a grinding ring mounted in or on a stationary grinder plate mounting, and wherein in the open position the rotating grinder plate mounting can be directly accessed.

The rotating grinder plate mounting can be fixed to the machine shaft of the grinder motor by way of an attachment element which can be directly accessed in the open position. Preferably, the machine shaft of the grinder motor is slidably mounted and biased in a direction towards the front portion, preferably by way of a spring in a bearing of the machine shaft.

Furthermore, the present invention relates to a method of servicing and/or cleaning a grinder according to the above, wherein for servicing and/or cleaning the grinder it is brought from the closed position to the open position, and the grinder unit and/or the interior elements of the front portion is accessed and cleaned and/or disassembled and/or serviced in that open position, reassembled and then brought into the closed position.

Further embodiments of the invention are laid down in the dependent claims.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a grinder in a closed position, wherein in a) a front view is shown, in b) a top view, in c) a side view from the hinge side, in d) a top perspective view from the opening side, in e) a horizontal cut along the line A-A in Fig. 1c), and in f) a partial cut of the front portion of the grinder;
- Fig. 2: shows a grinder in an open position, wherein in a) a front view is shown, in b) a top view, in c) a side view from the hinge side, in d) a top perspective view from the opening side and in e) a horizontal cut along the line B-B in Fig. 2c).

### DESCRIPTION OF PREFERRED EMBODIMENTS

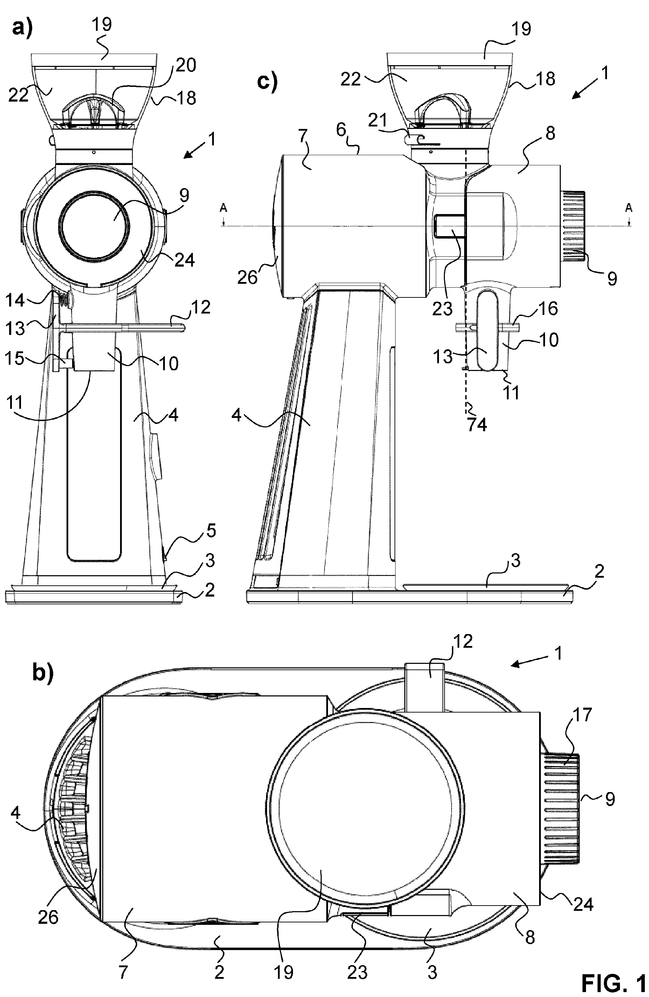

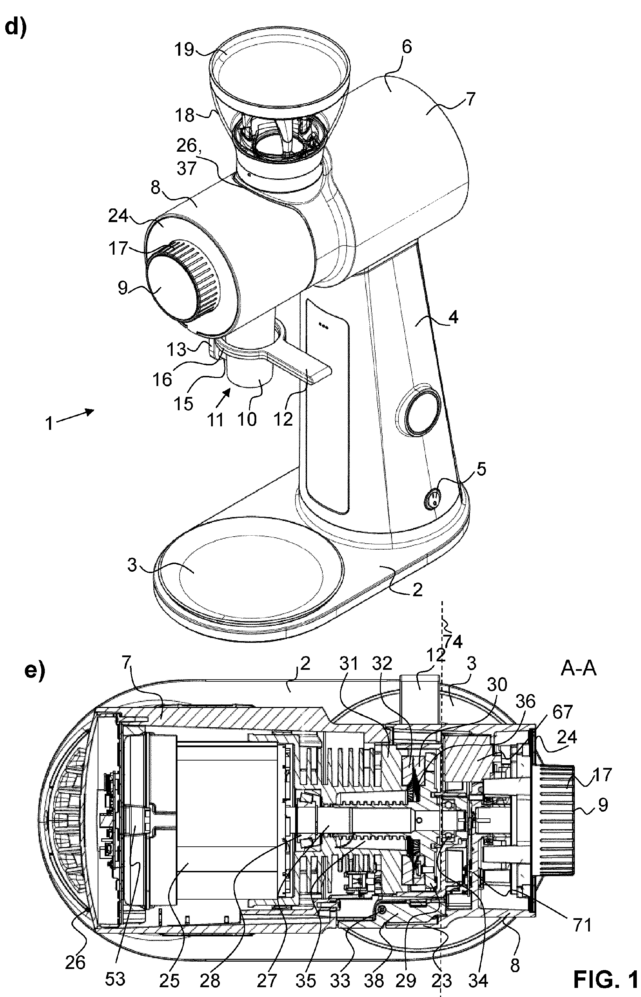

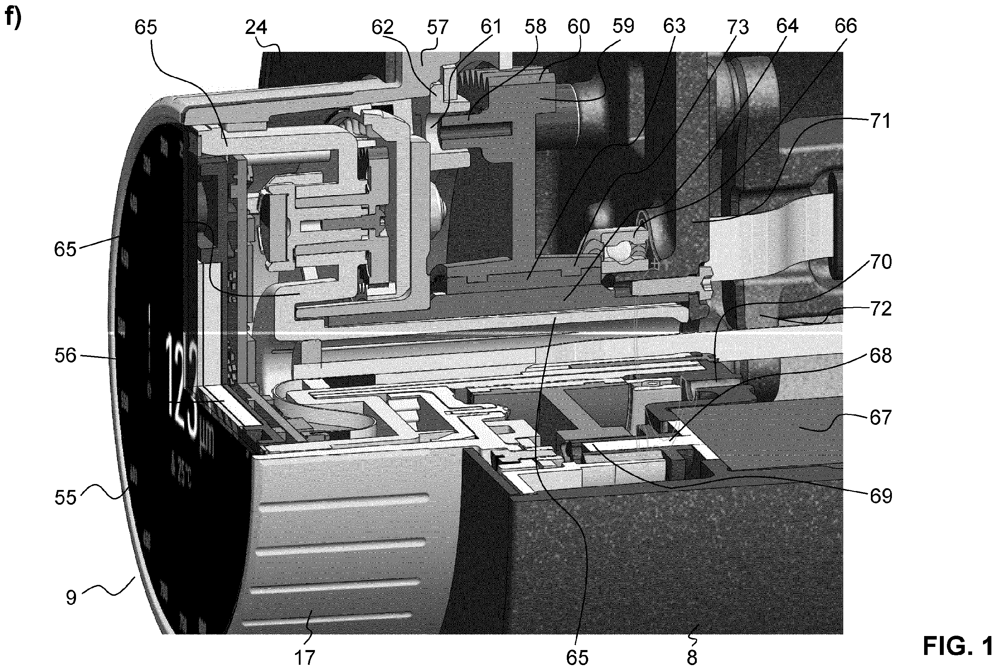

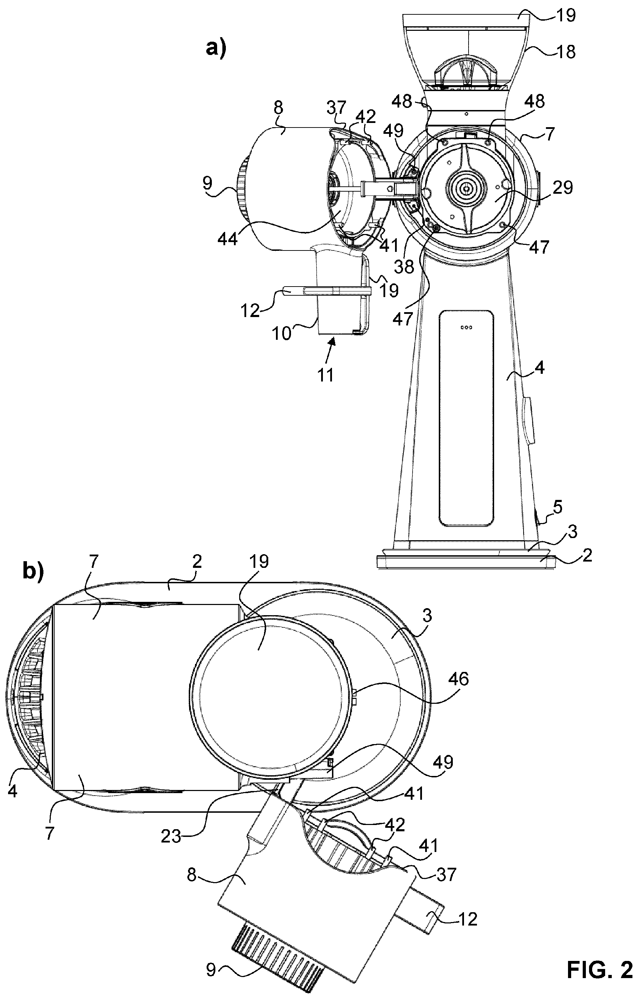

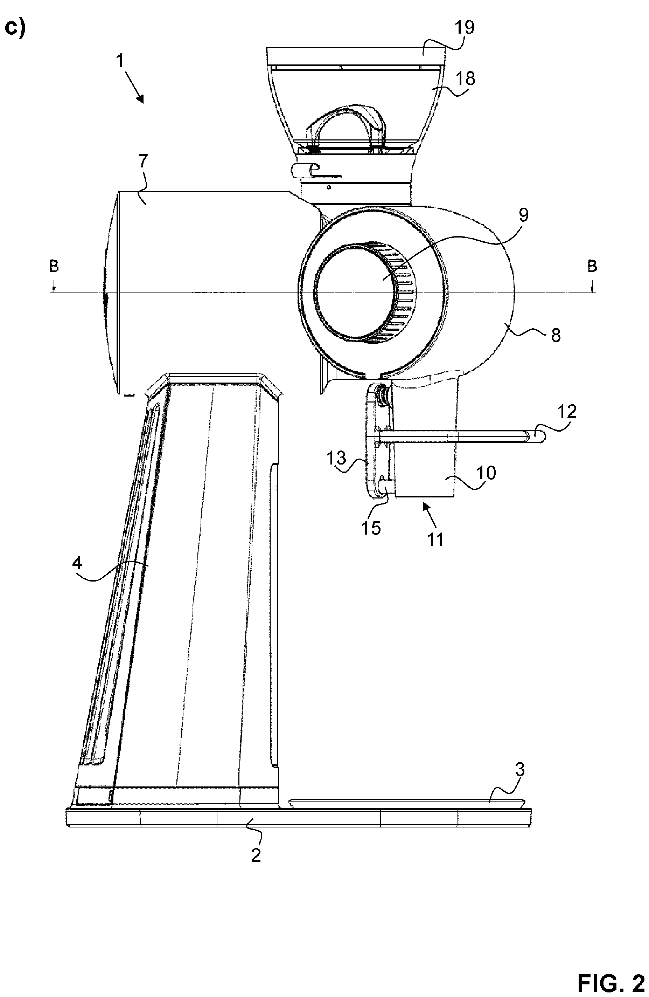

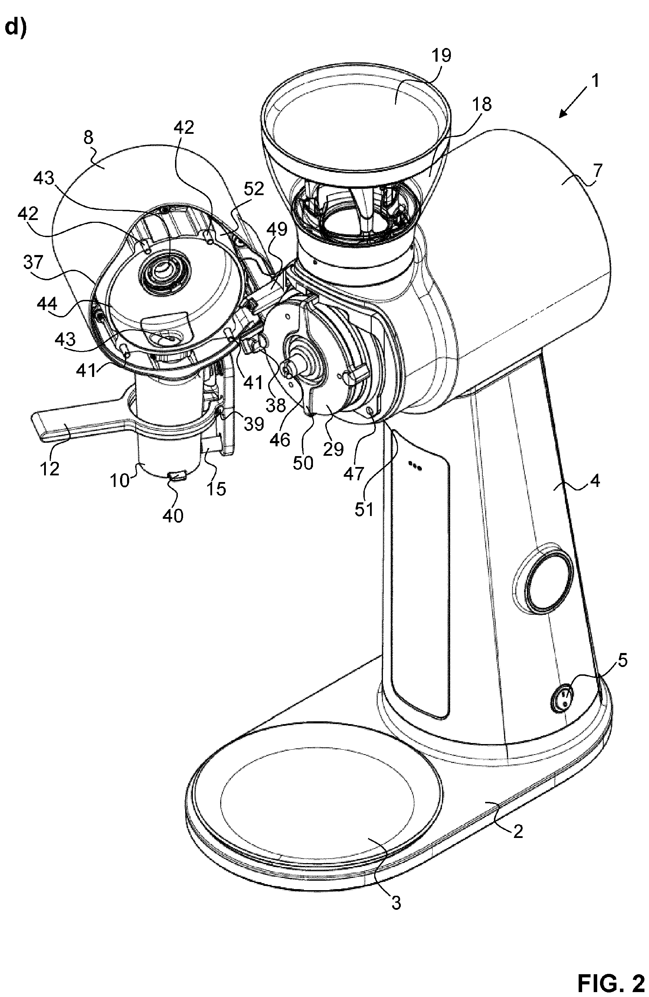

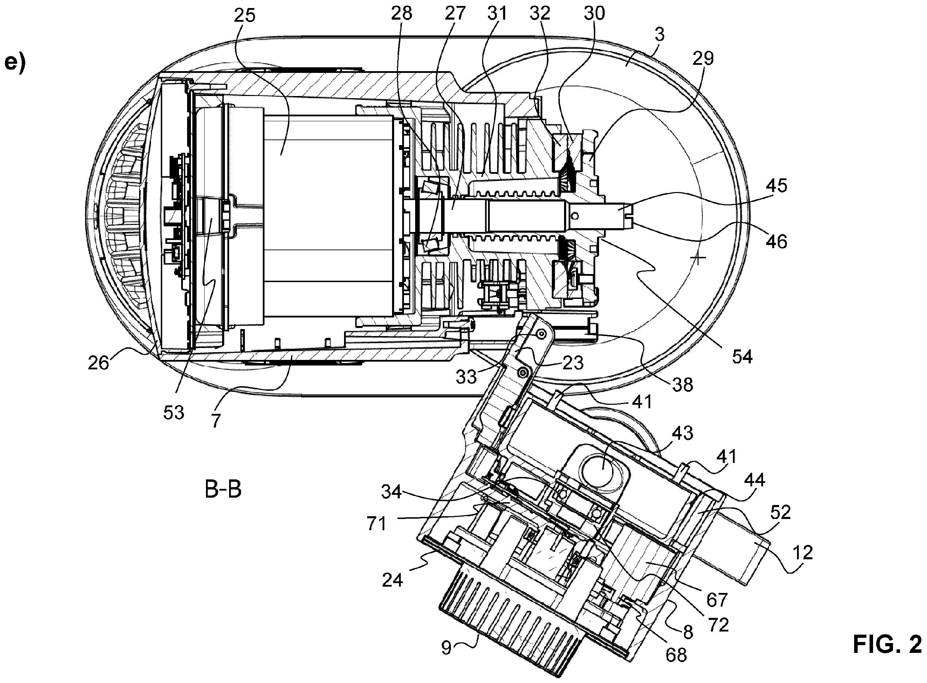

In **Fig. 1** a grinder embodying elements of the invention is shown in the closed position, and in **Fig. 2** the same grinder is shown in the open position. The same reference numerals indicate the same structural elements in the figures.

The grinder 1 comprises a base plate 2 with a collection dish 3 in a front portion thereof and below an outlet opening 11 of the grinder. On that base plate 2 in the backside area there is located a vertical stand 4, which may contain electronics, power supply and, in this case, on the lateral side is provided with the main switch 5.

On top of that vertical stand 4, there is the horizontal part 6 of the grinder. That horizontal part 6 is composed of a back portion 7 with an essentially cylindrical housing, in which back portion 7 the grinder motor 25 is located with its motor shaft 27 oriented in a horizontal orientation and pointing into the front direction.

The horizontal part 6 is further comprising a front portion 8, and that front portion also comprises an essentially cylindrical housing and is arranged coaxially with the back portion 7.

In the interface region between the back portion 7 and the front portion 8, on the back portion 7 on top of it there is provided a coffee bean hopper 18 in the form of a funnel, comprising a lid 19 and enclosing an interior space 22 to take up the coffee beans to be ground. To make sure there is proper feeding of the coffee beans into the grinder there can be provided distribution elements 20, stationary or rotating, in that interior space 22. On the bottom the hopper 18 opens into a channel leading into the actual grinder unit.

To the backside, the back portion 7 is closed by a back cover 26, and to the front side of the front portion 8 this is provided with a front face plate 24, in the region of which, coaxially with the motor shaft 27, the manual grinder adjustment wheel 9 is mounted. Typically, the adjustment wheel 9 comprises, on its outer circumferential cylindrical surface, axial ribs and/or indentations for ease of handling. Also on the front face plate 24 and/or the front surface of the grinder adjustment wheel 9 there can be visual indicators, also in the form of a display unit, as an indicator for the chosen gap with/grinder degree etc. of the grinding unit.

On its bottom side, the overarching front portion is provided with an outlet tube or duct 10, having an outlet opening 11, through which the ground coffee exits the grinder, typically into a filter holder which can be attached in that phase to the grinder. For that attachment of a filter holder, there is provided a filter holder mounting mechanism, comprising a lever 12, with a crossbar 13, which on the top is provided with a coil spring 14 and on the bottom with an engagement portion 15, and which is tiltable mounted around axis 39. The lever comprises two circumferential arms 16 traveling around the duct 10. Attaching the filter holder to that mechanism can either take place by auto-engagement (self-engaging) with form-closure upon approach of the filter holder from the bottom, or it can take place by active manipulation of the lever 12 by the user.

As one can see, in particular from the cuts along the horizontal plane according to **Fig. 1e****)** at the height of the machine shaft 27 of the grinder motor 25, in the housing of the back portion 7 the motor 25 is firmly mounted and the machine shaft 27 penetrates in the direction of the front portion 8. The machine shaft 27 is mounted in the motor block with the windings in an axially slidable manner, which will be discussed further below. Surrounding the frontside portion of that machine shaft 27 there is provided a stationary grinder plate mounting 31, which on the one hand carries the stationary grinder plate or stationary burr 32, and the inside of that stationary grinder plate mounting 31 in addition to that defines an upstream feed cavity 35, which is connected with the outlet of the above mentioned coffee bean hopper 18 for feeding of coffee beans into the actual grinder part.

The middle portion of the machine shaft 27 is mounted in that stationary grinder plate mounting 31 by way of a middle bearing 28, allowing the machine shaft 27 to rotate but also to slide axially in that middle bearing 28 to a certain extent.

On its backside, the motor shaft 27 is mounted on the backside end of the actual motor block by way of a backside bearing 53. In that backside bearing 53, the motor shaft 27 is rotatably mounted in an axially slidable way within defined limits, the extent of which essentially defines the limits of the axial displacement allowed for the adjustment of the gap of the grinder. Importantly, this backside bearing is provided with a spiral spring, which presses the machine shaft 27 in the direction of the front portion 8 of the grinder. This means that in the absence of any counterforce, the motor shaft 27 will be displaced as much as possible and in as far as allowed by corresponding abutment positions of the machine shaft 27 in the direction of the front portion 8, and the gap of the grinder, i.e. the distance between the burrs 30 and 32 will be maximal.

In the direction of the front portion 8 the stationary grinder plate mounting 31 is followed by the rotating grinder plate mounting 29, which is fixed to a front portion (but not the very tip thereof) of the shaft 27, for example by way of a screw 46. This rotating grinder plate mounting 29 carries the rotating grinder plate or burr 30, which is opposite to the stationary grinder plate 32, such that between these two grinder elements the grinding cavity 36 is defined.

The front portion 8 follows on that rotating grinder plate mounting 29 in that it comprises as a first element a front side bearing 34, which acts as bearing of the tip portion 45 of the shaft 27.

This front side bearing 34 is in itself slidably mounted in the front portion 8, and in the closed position it abuts with a front surface or front contour 54 of the rotating grinder plate mounting. By way of an axial force in the backside direction of this slidable front side bearing 34 onto the rotating grinder plate mounting 29, the axial position of the machine shaft 27 and correspondingly the width of the gap of the grinder is defined against the force of the spiral spring mentioned above located in the back side bearing 53.

On that front contour 54 of the rotating grinder plate mounting there is a rib 50, the main function of which is to clean any ground coffee residues that are trapped between said flat flange 54 and the grinder housing.

The front portion 8 is mounted on the back portion 7 by way of a hinge, which is located at the tip of a hinge protrusion 23 provided on the front portion 8 and pointing horizontally in the direction of the back portion 7 in the form of a tab. This mounting is advantageous to make sure that in the initial phase of the opening the opening direction of the front portion 8 relative to the back portion 7 is as coaxial as possible. The axis 33 of that hinge is arranged vertically and slightly offset to the inside relative to the outline of the housing.

As one can see, in particular from the representations illustrating the open position, when the front portion 8 is tilted away from the back portion 7, on the inside and within the contact line 37 of the housing of the front portion there is provided an inner cover 44, leaving an interspace 52 between the cylindrical portion thereof and the outer housing of the front portion 8. On the outside of the cylindrical portion of that inner cover 44 there are provided a pair of upper engagement screws 42 and lower engagement screws 41, which point in a direction of the back portion 7 and which, in a closed position are arranged coaxially with the shaft 27 and engage into corresponding threadings 47 and 48 provided in an inner front portion of the back portion 7 inside of the contact line 51 of the back portion. By way of these interlocking elements, it is made sure that when approaching and in the closed position the back portion 7 and the front portion 8 are properly aligned and held in place, and that the front portion 8 is firmly fixed to the back portion 7 in the closed position.

To open the grinder, the front face plate 24 is removed from the front side of the front portion 8 (for example by unlocking an engagement tab engaging the front face plate 24 in a housing portion), allowing to access the heads of the screws 41/42 and allowing to unscrew this locking engagement between the front portion 8 and the back portion 7.

In the lower portion of the cylindrical part of the inner cover 44 there is provided an entry opening 43 which opens into the interior of the outlet tube 10 for the discharge of the ground coffee. In the hinge area there is provided an upper protrusion 49 as well as a lower protrusion 38. The upper protrusion 49 and the lower protrusion 38 contain an axial guide (i.e. extending in a direction parallel to the extension direction of the protrusions 38 and 49, i.e. perpendicular to the contact plane in the closed position illustrated by the dashed line 74 schematically in **Fig. 1c** **and e)** for the front unit 7. The axial guide can be provided provided as a slot open towards the bottom in the upper protrusion 49 and a parallel corresponding slot open towards the upper side in the lower protrusion 38, and the axis 33 is sliding in that slot. The axis can be mounted at both (upper and lower) ends in a corresponding axis mounting nut which itself is sliding in the upper or lower slot, respectively. To provide for a controlled sliding motion of the axis 33 during the motion along the protrusions 38, 49, the upper and the lower slot can be provided as an undercut groove or dovetail groove with lateral projections at the exit of the slot, and the mounting nut for the axis 33 can be provided with lateral grooves engaging in the lateral projections of the slots in the protrusions 49 and 38.

To open the front unit 7, the four screws 41/42 are loosened, then the head unit 7 is pulled forward towards by the operator and away from the rear part 6 of the grinder along the slots in the upper protrusion 49 and the lower protrusion 38. Once fully extended, the user is then able to swing open the head unit 7 "like a door".

As for the grinder gap adjustment mechanism this can be explained best with the representation given in **Fig. 1f****),** showing a partial quarter cut through the front portion 8. The grinder adjustment wheel 9 for the manual adjustment comprises a circumferential surface with the above-mentioned ribs 17. To the front the grinder adjustment wheel 9 is covered by a front plate 56, which in this case is at least partially transparent, such that a display unit 56 which is located behind can represent information through that front plate 56: for example information about the gap width, the grinding degree, the temperature, humidity, or the type of coffee for which the beans are ground, or a combination of such information.

In the interior of the front portion 8 there is provided a stationary interior mounting structure 65. The grinder adjustment wheel 9 comprises a portion which penetrates behind the front face plate 24 and which has an engagement flange 57, attached to and cooperating with a ring-like attachment plate 62. That attachment plate 62 comprises engagement openings 61, into which engagement protrusions 58, which axially protrude from a gear wheel 59, slidingly engage. The gear wheel 59 comprises an radially external toothing 60, and itself is rotatably mounted in being fixed by way of interior portion 73 to the outer part 63 of a threaded hub. That outer part 63 of the threaded hub is rotatably and by way of a threading mounted on an inner part 64 of the threaded hub, which in turn is stationary and which is firmly attached to a portion of the interior mounting structure 65 as well as to a radial wall 71. There is further provided an axially slidable outer bearing 66, which is coupled to the outer part 63 of the threaded hub and/or the interior portion 73 of the gear wheel 59. Behind the radial wall 72 in the direction of the back portion 7, there is a cavity 72, in which the above-mentioned front side bearing 34 for the shaft 27 is located (not illustrated in **Fig. 1f****)).** The outer bearing 66 is coupled in an axial direction to the front side bearing 34 by way of three circumferentially distributed, slidable adjustment pins (not illustrated in **Fig. 1f****)),** which penetrate through through-openings 70 in the stationary radial wall 72.

Also located in the front portion 8 is a motor 67 for the automatic grinder gap adjustment. That motor 67 is arranged with its shaft 68 parallel to the machine shaft 27, but offset in a lateral direction, and the shaft 68 is provided with an outer threading 69 or rather with a shaft element providing that outer threading. The outer threading 69 cooperates with the external toothing 60 of the gear wheel 59.

The motion train for manual adjustment is as follows: if the user manipulates the grinder adjustment wheel 9, that rotational motion is transferred via the engagement flange 57, the attachment plate 62, the axially sliding but rotationally fixed engagement between the engagement protrusions 58 and the engagement openings 61, to a corresponding rotation of the gear wheel 59. Rotation of the gear wheel 59, due to the threading of the threaded hub and the rotation of the outer part 63 relative to the stationary inner part 64 thereof, leads to an axial displacement of the outer part 63 as well as of the gear wheel 59 and the interior portion 73 of the gear wheel 59. This in turn axially shifts the outer bearing 66, which by way of the adjustment pins penetrating through the through openings 70 in turn axially shifts the front side bearing 34. If the motion in an axial direction of the adjustment pins is in the direction of the back portion 7, this leads to a backwards motion of the machine shaft 27 against the force of the spiral spring located in the back side bearing 53, and to a backwards motion of the rotating grinder plate mounting 29 and the rotating grinder plate 30. So, a motion in that direction leads to a reduction of the gap width of the grinding cavity 36.

If, alternatively, the grinder is not adjusted manually but by way of the motor 67, the shaft 68 of that motor 67 rotates and by way of the outer threading 69 cooperates with the external toothing 60 of the gear wheel 59. This leads to an axial displacement thereof in the same way as described for the manual operation further above.

This compact and highly reliable mechanism can be combined with the hinged structure of the front portion 8 on the back portion 7 leading to a high reliability but easy to service and repair mechanism.

### LIST OF REFERENCE SIGNS

| | | | |
|---|---|---|---|
| 1 | grinder | 21 | locking element of 18 |
| 2 | baseplate | 22 | interior space of 18 |
| 3 | collection dish | 23 | hinge protrusion on front portion |
| 4 | vertical stand | | |
| 5 | switch | 24 | front face plate of 8 |
| 6 | horizontal part | 25 | motor |
| 7 | back portion of 6 containing the motor | 26 | back cover of 7 |
| | | 27 | machine shaft |
| 8 | front portion of 6 | 28 | middle bearing |
| 9 | grinder adjustment wheel | 29 | rotating grinder plate mounting |
| 10 | outlet tube | | |
| 11 | outlet opening | 30 | rotating grinder plate |
| 12 | lever for filter holder mounting | 31 | stationary grinder plate mounting |
| 13 | crossbar of 12 | 32 | stationary grinder plate |
| 14 | coil spring | 33 | hinge axis |
| 15 | engagement portion of 12 | 34 | front side bearing |
| 16 | circumferential portion of 12 | 35 | upstream feed cavity |
| 17 | ribs on circumferential surface of 9 | 36 | grinding cavity |
| | | 37 | contact line on 8 |
| 18 | coffee bean hopper | 38 | lower protrusion on 7 |
| 19 | lid of 18 | 39 | tilt axis of 12 |
| 20 | distribution element of 18 | 40 | tab |
| 41 | lower engagement screw on 8 | 59 | gear wheel |
| | | 60 | external toothing of 59 |
| 42 | upper engagement screw on 8 | 61 | engagement opening for 58 in 62 |
| 43 | entry opening into 10 | 62 | attachment plate |
| 44 | inner cover of 8 | 63 | outer part of threaded hub |
| 45 | protruding portion of 27 | 64 | inner part of threaded hub (stationary) |
| 46 | screw | | |
| 47 | inner threading for 41 | 65 | interior mounting structure |
| 48 | inner threading for 42 | 66 | outer bearing |
| 49 | upper protrusion on 7 | 67 | motor for grinder adjustment |
| 50 | rib on front of 29/54 | 68 | motor shaft of 67 |
| 51 | contact line on 7 | 69 | outer threading on 68 |
| 52 | interspace between 44 and circumferential housing of 7 | 70 | through openings in 71 for adjustment pin |
| 53 | backside bearing | 71 | radial wall |
| 54 | front surface/contour of 29 | 72 | cavity for 34 |
| 55 | front plate of 9 | 73 | interior portion |
| 56 | electronic display unit | 74 | contact plane in the closed |
| 57 | engagement flange | | position |
| 58 | engagement protrusion of 59 | | |

## Claims

1. Coffee grinder (1) with grinder motor (25) and a grinder unit with a rotating grinder element (30) and a stationary grinder element (31), the distance of which can be manually adjusted by using an adjustment element (9) and/or automatically adjusted by way of a grinder adjustment motor (67), wherein
the grinder motor (27) and the grinder unit are located in a first portion (7) of the grinder (1) and the adjustment element (9) and the grinder adjustment motor (67) are mounted in a second portion (8) of the grinder, **characterized**
**in that** the first portion (7) is fixedly mounted on a stand (4) and the second portion (8) is attached to the first portion (7) by way of a hinge,
said hinge allowing to tilt the second portion (8) from
a closed position, in which the first portion (7) is located facing the second portion (8) and adjacent to the second portion (8), and where the first portion (7) and the second portion (8) are engaged in a way such that by way of the adjustment element (9) and/or the grinder adjustment motor (67) the distance of the grinder elements (30, 31) can be adjusted,
to an open position, in which the second portion (8) is panned away from the first portion (7) and whereby access, in particular direct access, is given to the grinder unit.

2. Grinder (1) according to claim 1, wherein an axis (33) of said hinge is arranged in a vertical direction, and wherein preferably the axis (33) is located in or at a protrusion (23) of the second portion (8) protruding from the second portion (8) in the direction of the first portion (7)
and/or wherein an axis (33) of said hinge is arranged in a vertical direction and is mounted in or on the first portion (7) in a slidable way, preferably slidable along a direction perpendicular to a contact plane (74) between the first portion (7) and the second portion (8) in the closed position, and wherein further preferably the slidable mounting is provided in or on protrusions (38, 49) protruding from the first portion (7) along said direction perpendicular to the contact plane (74).

3. Grinder (1) according to any of the preceding claims, wherein there is provided a locking mechanism for locking the second portion (8) in the closed position, wherein preferably said locking mechanism is based on form closure and/or force closure and preferably is selected from the group consisting of bayonet locking, lever lock, hook lock, screwing or a combination thereof.

4. Grinder (1) according to claim 3, wherein the locking mechanism is at least partly located essentially opposite to the location of the hinge.

5. Grinder (1) according to any of claims 3 or 4, wherein the locking mechanism is provided in that the second portion (8) is provided with engagement elements, preferably with engagement screws (41, 42), which in the closed position are oriented essentially parallel to a machine shaft (27) axis of the grinder motor (25), which engagement elements in the closed position engage, preferably threadingly, in complementary engagement means, preferably in the form of engagement interior threadings (47, 48) provided in or on the first portion (7).

6. Grinder (1) according to claim 5, wherein the engagement elements and the complementary engagement means are provided in a contacting interface portion of the first portion (7) and of the second portion (8), such that in the closed position the engagement elements and the complementary engagement means are buried within the housing of the first portion (7) and the second portion (8)
and/or wherein the engagement screws (41,42) can be made accessible for loosening by removal of a front face plate (24) of the front portion (8).

7. Grinder (1) according to any of the preceding claims, wherein the second portion comprises at least one bearing (34) acting as a bearing for a tip portion (45) of the machine shaft (27), wherein this bearing (34) is axially slidably mounted in the front portion (8) but axially fixed in a direction to the back portion (7) to the axially slidable machine shaft (27) in the closed position.

8. Grinder (1) according to any of the preceding claims, wherein the adjustment element (9) is an adjustment wheel rotatably mounted in the second portion (8) with a horizontal rotation axis and preferably facing a front side of the grinder (1).

9. Grinder (1) according to any of the preceding claims, wherein the grinder adjustment motor (67) is located in the front portion (8), and wherein the grinder adjustment motor shaft (68) is parallel to the motor shaft (27) but radially offset to the motor shaft (27).

10. Grinder (1) according to any of the preceding claims, wherein in the front portion (8) there is provided a gear wheel (59), which is coaxial with the machine shaft (27), which gear wheel (59) is mounted such that upon rotation of the gear wheel (59) the gear wheel (59) is displaced relative to the front portion (8) in an axial direction, and wherein the axial displacement of the gear wheel (59) is directly or indirectly coupled to the axially slidably mounted machine shaft (27) and in particular to a rotating grinder plate mounting (29) mounted on the machine shaft (27) and carrying the rotating grinder plate (30), for adjustment of the gap width of the grinder unit.

11. Grinder (1) according to claim 10, wherein the gear wheel (59) is rotating for gap width adjustment by way of the manual grinder adjustment wheel (9) as well as by way of the grinder motor (67), wherein preferably the gear wheel (59) is provided with an external toothing (60) cooperating with an outer threading (69) of the motor shaft (68) of the grinder adjustment motor (67).

12. Grinder (1) according to any of the preceding claims, wherein it comprises a vertical stand (4) on a baseplate (2) and wherein in the closed position said first portion (7) and said second portion (8) are aligned coaxially and horizontally and the grinder motor (25) is mounted in said first portion (7) with its machine shaft (27) being arranged horizontally and preferably coaxially with said first and second portion (7, 8).

13. Grinder (1) according to any of the preceding claims, wherein the grinder unit comprises a rotating grinder element (30) in the form of a grinding ring (30) mounted on a rotating grinder plate mounting (29) which is coupled to the machine shaft (27) of the motor (25), and a stationary grinder element (31) also in the form of a grinding ring (32) mounted in or on a stationary grinder plate mounting (29), and wherein in the open position the rotating grinder plate mounting (29) can be directly accessed.

14. Grinder (1) according to claim 13, wherein the rotating grinder plate mounting (29) is fixed to the machine shaft (27) of the grinder motor (25) by way of an attachment element (46) which can be directly accessed in the open position,
and/or wherein the machine shaft (27) of the grinder motor (25) is slidably mounted and biased in a direction towards the front portion (8), preferably by way of a spring in a bearing (53) of the machine shaft (27).

15. Method of servicing and/or cleaning a grinder (1) according to any of the preceding claims, wherein for servicing and/or cleaning the grinder it is brought from the closed position to the open position, and the grinder unit and/or the interior elements of the front portion (8) is accessed and cleaned and/or disassembled and/or serviced in that open position, reassembled and then brought into the closed position.

## Patentansprüche

1. Kaffeemühle (1) mit einem Mahlwerkmotor (25) und einer Mahlwerkseinheit mit einem rotierenden Mahlwerkteil (30) und einem stationären Mahlwerkteil (31), deren Abstand manuell mittels eines Einstellelements (9) und/oder automatisch mittels eines Mahlwerk-Einstellmotors (67) einstellbar ist,
wobei sich der Mahlmotor (27) und die Mahleinheit in einem ersten Teil (7) der Mühle (1) befinden und das Einstellelement (9) und der Mahlwerk-Einstellmotor (67) in einem zweiten Teil (8) der Mühle angebracht sind, **dadurch gekennzeichnet**
**dass** der erste Teil (7) fest auf einem Ständer (4) montiert ist und der zweite Teil (8) über ein Scharnier am ersten Teil (7) befestigt ist,
wobei das Scharnier es ermöglicht, den zweiten Teil (8) aus einer
einer geschlossenen Position, in der der erste Teil (7) dem zweiten Teil (8) gegenüberliegt und an den zweiten Teil (8) angrenzt, und in der der erste Teil (7) und der zweite Teil (8) so ineinander greifen, dass mittels des Verstellelements (9) und/oder des Mahlwerk-Verstellmotors (67) der Abstand der Mahlwerk-Elemente (30, 31) eingestellt werden kann,
in eine geöffnete Position, in der der zweite Teil (8) vom ersten Teil (7) weggeschwenkt ist und wodurch Zugang, insbesondere direkter Zugang, zur Schleifeinheit gegeben ist.

2. Schleifmaschine (1) nach Anspruch 1, wobei eine Achse (33) des Scharniers in vertikaler Richtung angeordnet ist und wobei vorzugsweise die Achse (33) in oder an einem Vorsprung (23) des zweiten Teils (8) angeordnet ist, der vom zweiten Abschnitt (8) in Richtung des ersten Teils (7) vorsteht
und/oder wobei eine Achse (33) des Scharniers in vertikaler Richtung angeordnet und in oder an dem ersten Teil (7) verschiebbar gelagert ist, vorzugsweise verschiebbar entlang einer Richtung senkrecht zu einer Kontaktfläche (74) zwischen dem ersten Teil (7) und dem zweiten Teil (8) in der geschlossenen Position, und wobei ferner vorzugsweise die verschiebbare Lagerung in oder an Vorsprüngen (38, 49) vorgesehen ist, die entlang der Richtung senkrecht zur Kontaktfläche (74) aus dem ersten Teil (7) herausragen.

3. Schleifmaschine (1) nach einem der vorstehenden Ansprüche, wobei ein Verriegelungsmechanismus zum Verriegeln des zweiten Teils (8) in der geschlossenen Position vorgesehen ist, wobei der Verriegelungsmechanismus vorzugsweise auf Formschluss und/oder Kraftschluss basiert und vorzugsweise aus der Gruppe ausgewählt ist, die aus Bajonettverschluss, Hebelverschluss, Hakenverschluss, Schraubverschluss oder einer Kombination davon besteht.

4. Schleifmaschine (1) nach Anspruch 3, wobei der Verriegelungsmechanismus zumindest teilweise im Wesentlichen gegenüber der Stelle des Scharniers angeordnet ist.

5. Schleifmaschine (1) nach einem der Ansprüche 3 oder 4, wobei der Verriegelungsmechanismus dadurch vorgesehen ist, dass der zweite Abschnitt (8) mit Eingriffselementen, vorzugsweise mit Eingriffsschrauben (41, 42) versehen ist, die in der geschlossenen Position im Wesentlichen parallel zu einer Maschinenwellenachse (27) des Schleifmaschinenmotors (25) ausgerichtet sind, wobei die Eingriffselemente in der geschlossenen Position vorzugsweise durch Gewinde in komplementäre Eingriffsmittel, vorzugsweise in Form von Eingriffsinnengewinden (47, 48), die in oder an dem ersten Teil (7) vorgesehen sind, eingreifen.

6. Schleifmaschine (1) nach Anspruch 5, wobei die Eingriffselemente und die komplementären Eingriffsmittel in einem Kontaktbereich des ersten Teils (7) und des zweiten Teils (8) vorgesehen sind, so dass in der geschlossenen Position die Eingriffselemente und die komplementären Eingriffsmittel innerhalb des Gehäuses des ersten Teils (7) und des zweiten Teils (8) versenkt sind
und/oder wobei die Eingriffsschrauben (41, 42) durch Entfernen einer Frontplatte (24) des vorderen Teil (8) zum Lösen zugänglich gemacht werden können.

7. Schleifmaschine (1) nach einem der vorstehenden Ansprüche, wobei der zweite Teil mindestens ein Lager (34) umfasst, das als Lager für einen Spitzenabschnitt (45) der Maschinenwelle (27) fungiert, wobei dieses Lager (34) im vorderen Teil (8) axial verschiebbar, in Richtung zum hinteren Teil (7) jedoch axial fixiert in der geschlossenen Position an der axial verschiebbaren Maschinenwelle (27) angebracht ist.

8. Schleifmaschine (1) nach einem der vorstehenden Ansprüche, wobei das Einstellelement (9) ein Einstellrad ist, das mit einer horizontalen Drehachse drehbar im zweiten Abschnitt (8) gelagert ist und vorzugsweise einer Vorderseite der Schleifmaschine (1) zugewandt ist.

9. Mühle (1) nach einem der vorstehenden Ansprüche, wobei sich der Mühlenverstellmotor (67) im vorderen Teil (8) befindet und wobei die Mühlenverstellmotorwelle (68) parallel zur Motorwelle (27) verläuft, jedoch radial zur Motorwelle (27) versetzt ist.

10. Schleifmaschine (1) nach einem der vorstehenden Ansprüche, wobei im vorderen Maschinenabschnitt (8) ein Zahnrad (59) vorgesehen ist, das koaxial zur Maschinenwelle (27) ist, wobei das Zahnrad (59) so angebracht ist, dass sich das Zahnrad (59) bei Drehung des Zahnrads (59) relativ zum vorderen Abschnitt (8) in axialer Richtung verschiebt, und wobei die axiale Verschiebung des Zahnrades (59) direkt oder indirekt mit der axial verschiebbar gelagerten Maschinenwelle (27) und insbesondere mit einer auf der Maschinenwelle (27) gelagerten, die rotierende Schleifscheibe (30) tragenden rotierenden Schleifscheibenhalterung (29) zur Einstellung der Spaltbreite der Schleifeinheit gekoppelt ist.

11. Schleifmaschine (1) nach Anspruch 10, wobei das Zahnrad (59) sowohl über das manuelle Schleifmaschinen-Einstellrad (9) als auch über den Schleifmaschinenmotor (67) zur Einstellung der Spaltbreite drehbar ist (67) drehbar ist, wobei vorzugsweise das Zahnrad (59) mit einer Außenverzahnung (60) versehen ist, die mit einem Außengewinde (69) der Motorwelle (68) des Schleifverstellmotors (67) zusammenwirkt.

12. Schleifmaschine (1) nach einem der vorstehenden Ansprüche, wobei sie einen vertikalen Ständer (4) auf einer Grundplatte (2) aufweist und wobei in der geschlossenen Position der erste Teil (7) und der zweite Teil (8) koaxial und horizontal ausgerichtet sind und der Schleifmotor (25) in dem ersten Teil (7) montiert ist, wobei seine Maschinenwelle (27) horizontal und vorzugsweise koaxial zu dem ersten und zweiten Teil (7, 8) angeordnet ist.

13. Schleifmaschine (1) nach einem der vorstehenden Ansprüche, wobei die Schleifeinheit ein rotierendes Schleifelement (30) in Form eines Schleifrings (30) umfasst, der auf einer rotierenden Schleifplattenhalterung (29) montiert ist, die mit der Maschinenwelle (27) des Motors (25) gekoppelt ist, und ein stationäres Schleifelement (31), ebenfalls in Form eines Schleifrings (32), das in oder an einer stationären Schleifplattenhalterung (29) angebracht ist, und wobei in der offenen Position die rotierende Schleifplattenhalterung (29) direkt zugänglich ist.

14. Schleifmaschine (1) nach Anspruch 13, wobei die drehbare Schleifplattenhalterung (29) über ein Befestigungselement (46), das in der geöffneten Position direkt zugänglich ist, an der Maschinenwelle (27) des Schleifmotors (25) befestigt ist,
und/oder wobei die Maschinenwelle (27) des Schleifmotors (25) verschiebbar gelagert und in Richtung des vorderen Abschnitts (8) vorgespannt ist, vorzugsweise mittels einer Feder in einem Lager (53) der Maschinenwelle (27).

15. Verfahren zur Wartung und/oder Reinigung einer Schleifmaschine (1) nach einem der vorstehenden Ansprüche, wobei zur Wartung und/oder Reinigung der Schleifmaschine diese aus der geschlossenen Position in die geöffnete Position gebracht wird und die Schleifeinheit und/oder die Innenelemente des vorderen Teils (8) in dieser geöffneten Position zugänglich gemacht und gereinigt und/oder zerlegt und/oder gewartet, wieder zusammengebaut und dann in die geschlossene Position gebracht werden.

## Revendications

1. Moulin à café (1) avec un moteur de broyage (25) et une unité de broyage comprenant un élément de broyage rotatif (30) et un élément de broyage fixe (31), dont la distance peut être réglée manuellement à l'aide d'un élément de réglage (9) et/ou automatiquement à l'aide d'un moteur de réglage du broyeur (67),
dans lequel le moteur de broyage (27) et l'unité de broyage sont situés dans une première partie (7) du broyeur (1) et l'élément de réglage (9) et le moteur de réglage du broyeur (67) sont montés dans une deuxième partie (8) du broyeur, **caractérisé**
**en ce que** la première partie (7) est montée de manière fixe sur un support (4) et la deuxième partie (8) est fixée à la première partie (7) au moyen d'une charnière,
ladite charnière permettant d'incliner la deuxième partie (8) à partir d'
une position fermée, dans laquelle la première partie (7) est située face à la deuxième partie (8) et adjacente à la deuxième partie (8), et où la première partie (7) et la deuxième partie (8) sont engagées de telle manière que, au moyen de l'élément de réglage (9) et/ou du moteur de réglage du broyeur (67), la distance entre les éléments de broyage (30, 31) peut être réglée,
vers une position ouverte, dans laquelle la deuxième partie (8) est éloignée de la première partie (7) et où l'accès, en particulier l'accès direct, est donné à l'unité de broyage.

2. Broyeur (1) selon la revendication 1, dans lequel un axe (33) de ladite charnière est disposé dans une direction verticale, et dans lequel, de préférence, l'axe (33) est situé dans ou au niveau d'une saillie (23) de la deuxième partie (8) faisant saillie à partir de la deuxième partie (8) dans la direction de la première partie (7)
et/ou dans lequel un axe (33) de ladite charnière est disposé dans une direction verticale et est monté dans ou sur la première partie (7) de manière coulissante, de préférence coulissante le long d'une direction perpendiculaire à un plan de contact (74) entre la première partie (7) et la deuxième partie (8) dans la position fermée, et dans lequel, de préférence, le montage coulissant est prévu dans ou sur des saillies (38, 49) faisant saillie à partir de la première partie (7) le long de ladite direction perpendiculaire au plan de contact (74).

3. Broyeur (1) selon l'une quelconque des revendications précédentes, dans lequel il est prévu un mécanisme de verrouillage pour verrouiller la deuxième partie (8) dans la position fermée, dans lequel, de préférence, ledit mécanisme de verrouillage est basé sur une fermeture par forme et/ou une fermeture par force et est de préférence choisi parmi le groupe comprenant un verrouillage à baïonnette, un verrouillage à levier, un verrouillage à crochet , un vissage ou une combinaison de ceux-ci.

4. Broyeur (1) selon la revendication 3, dans lequel le mécanisme de verrouillage est au moins partiellement situé essentiellement à l'opposé de l'emplacement de la charnière.

5. Broyeur (1) selon l'une quelconque des revendications 3 ou 4, dans lequel le mécanisme de verrouillage est prévu en ce que la deuxième partie (8) est pourvue d'éléments d'engagement, de préférence de vis d'engagement (41, 42) qui, en position fermée, sont orientés essentiellement parallèlement à l'axe (27) de l'arbre du moteur (25) du broyeur, lesquels éléments d'engagement, en position fermée, s'engagent, de préférence par vissage, dans des moyens d'engagement complémentaires, de préférence sous la forme de filetages intérieurs d'engagement (47, 48) prévus dans ou sur la première partie (7).

6. Broyeur (1) selon la revendication 5, dans lequel les éléments d'engagement et les moyens d'engagement complémentaires sont prévus dans une partie d'interface de contact de la première partie (7) et de la deuxième partie (8), de telle sorte que, en position fermée, les éléments d'engagement et les moyens d'engagement complémentaires sont enfouis dans le boîtier de la première partie (7) et de la deuxième partie (8)
et/ou dans lequel les vis d'engagement (41, 42) peuvent être rendues accessibles pour être desserrées en retirant une plaque frontale (24) de la partie avant (8).

7. Meuleuse (1) selon l'une quelconque des revendications précédentes, dans laquelle la deuxième partie comprend au moins un palier (34) servant de palier pour une partie d'extrémité (45) de l'arbre de machine (27), dans lequel ce palier (34) est monté de manière axialement coulissante dans la partie avant (8) mais axialement fixe dans une direction vers la partie arrière (7) par rapport à l'arbre de machine axialement coulissant (27) dans la position fermée.

8. Meuleuse (1) selon l'une quelconque des revendications précédentes, dans laquelle l'élément de réglage (9) est une molette de réglage montée de manière rotative dans la deuxième partie (8) avec un axe de rotation horizontal et faisant de préférence face à une face avant de la meuleuse (1).

9. Broyeur (1) selon l'une quelconque des revendications précédentes, dans lequel le moteur de réglage du broyeur (67) est situé dans la partie avant (8), et dans lequel l'arbre du moteur de réglage du broyeur (68) est parallèle à l'arbre du moteur (27) mais décalé radialement par rapport à l'arbre du moteur (27).

10. Broyeur (1) selon l'une quelconque des revendications précédentes, dans lequel, dans la partie avant (8) de l' , est prévue une roue dentée (59) qui est coaxiale à l'arbre de la machine (27), laquelle roue dentée (59) est montée de telle sorte que, lors de la rotation de la roue dentée (59), la roue dentée (59) est déplacée par rapport à la partie avant (8) dans une direction axiale, et dans lequel le déplacement axial de la roue dentée (59) est couplé directement ou indirectement à l'arbre de machine (27) monté de manière axialement coulissante et en particulier à un support de plaque de broyage rotative (29) monté sur l'arbre de machine (27) et portant la plaque de broyage rotative (30), pour le réglage de la largeur de l'espace de l'unité de broyage.

11. Broyeur (1) selon la revendication 10, dans lequel la roue dentée (59) tourne pour le réglage de la largeur de l'écartement au moyen de la molette de réglage manuel du broyeur (9) ainsi qu'au moyen du moteur du broyeur (67), dans lequel, de préférence, la roue dentée (59) est pourvue d'une denture externe (60) coopérant avec un filetage externe (69) de l'arbre moteur (68) du moteur de réglage du broyeur (67).

12. Meuleuse (1) selon l'une quelconque des revendications précédentes, dans laquelle elle comprend un support vertical (4) sur une plaque de base (2) et dans lequel, en position fermée, ladite première partie (7) et ladite deuxième partie (8) sont alignées coaxialement et horizontalement et le moteur de broyeur (25) est monté dans ladite première partie (7), son arbre (27) étant disposé horizontalement et de préférence coaxialement avec lesdites première et deuxième parties (7, 8).

13. Broyeur (1) selon l'une quelconque des revendications précédentes, dans lequel l'unité de broyage comprend un élément de broyage rotatif (30) sous la forme d'une bague de broyage (30) montée sur un support de plaque de broyage rotatif (29) qui est couplé à l'arbre (27) du moteur (25), et un élément de broyage fixe (31) également sous la forme d'une bague de broyage (32) montée dans ou sur un support de plaque de broyage fixe (29), et dans lequel, en position ouverte, le support de plaque de broyage rotatif (29) est directement accessible.

14. Broyeur (1) selon la revendication 13, dans lequel le support de plaque de broyage rotatif (29) est fixé à l'arbre de machine (27) du moteur de broyeur (25) au moyen d'un élément de fixation (46) qui est directement accessible en position ouverte,
et/ou dans lequel l'arbre de machine (27) du moteur de broyeur (25) est monté de manière coulissante et sollicité dans une direction vers la partie avant (8), de préférence au moyen d'un ressort dans un palier (53) de l'arbre de machine (27).

15. Procédé d'entretien et/ou de nettoyage d'un broyeur (1) selon l'une quelconque des revendications précédentes, dans lequel, pour l'entretien et/ou le nettoyage du broyeur, celui-ci est amené de la position fermée d' t à la position ouverte, et l'unité de broyage et/ou les éléments intérieurs de la partie avant (8) sont accessibles et nettoyés et/ou démontés et/ou entretenus dans cette position ouverte, remontés, puis amenés en position fermée.
